# FASCICULE DE BREVET EUROPEEN

(11) **EP 3 679 476 B1**
(45) Date de publication et mention de la délivrance du brevet: **07.08.2024**
(21) Numéro de dépôt: 18773798.6
(22) Date de dépôt: 03.09.2018
(51) Int. Cl.: G06F 12/08

(54) **PROCÉDÉ AMÉLIORÉ POUR LE TRAITEMENT DE DONNÉES**
VERBESSERTES VERFAHREN ZUR DATENVERARBEITUNG
IMPROVED METHOD FOR DATA PROCESSING

(30) Priorité: 04.09.2017 FR 1758134
(43) Date de publication de la demande: 15.07.2020
(73) Titulaire: Vsora, 92360 Meudon La Foret (FR)
(72) Inventeur: MAALEJ, Khaled, 75008 Paris (FR); NGUYEN, Trung Dung, 91300 Massy (FR); SCHMITT, Julien, 91300 Massy (FR); BERNARD, Pierre-Emmanuel, 92160 Antony (FR)
(74) Mandataire: Plasseraud IP
(86) Numéro de dépôt international: PCT/FR2018/052140
(87) Numéro de publication internationale: WO 2019/043345

(56) Documents cités:
- EP-A1- 1 383 044
- EP-A1- 1 498 841
- EP-A1- 2 521 063
- US-B1- 6 381 738

## Description

Le domaine de l'invention se rapporte aux traitements de données numériques mis en oeuvre par des moyens informatiques, et plus particulièrement à la gestion de la mémoire impliquée dans un tel contexte. EP 2 521 063, US 6 381 738 et EP 1 383 044 traitent de tels sujets.

US 6 381 738 B1 décrit un procédé selon le préambule de la revendication 1 et un dispositif selon le préambule de la revendication 9.

De façon connue, en informatique, on appelle allocation le mécanisme visant à réserver des emplacements d'une mémoire pour y stocker des variables ou des objets, qui peuvent présenter des degrés de complexité et de taille élevés. Le pendant de l'allocation, la désallocation, est le mécanisme par lequel la mémoire allouée est libérée.

Parmi les principes couramment employés pour régir l'allocation d'objets d'un traitement de données à une mémoire, on recense le principe d'allocation dit sur une pile, ou encore dit en pile. Ce principe repose sur l'emploi d'un pointeur qui désigne la première adresse mémoire disponible. L'objet qui se voit alloué à la mémoire est alors stocké par suite à cette adresse, et le pointeur est mis à jour à partir de cette adresse mémoire et de la taille de l'objet alloué.

Ce principe d'allocation est particulièrement intéressant en ce qu'il est simple d'implémentation et donc de haute performance, mais il impose que la désallocation soit symétrique par rapport à l'allocation. Autrement dit, parmi les objets présents dans la mémoire à un instant donné, le dernier objet créé doit être le premier détruit. Ce fonctionnement est connu sous l'acronyme anglophone LIFO, pour Last In First Out en anglais, qui peut être traduit par « dernier arrivé premier parti ».

Dans de très nombreuses applications, du fait que les différents objets d'un traitement de données présentent des emplois très variés, ils se prêtent difficilement et/ou avec une moindre performance à une allocation et une désallocation correspondant à un fonctionnement de la mémoire en pile. En conséquence, le principe de gestion de la mémoire impliquée dans un traitement de données doit généralement être grandement complexifié.

L'invention vise à résoudre ce problème.

A cet effet, l'invention concerne un procédé tel que défini en revendication 1.

Selon un aspect de l'invention, les deux zones mémoires ont des emplacements de départ respectifs définis par des extrémités respectives opposées de l'entité mémoire.

Selon un aspect de l'invention, au moins deux zones appartiennent à des entités mémoires différentes. Selon un aspect de l'invention, mener une analyse du code informatique inclut, pour chaque objet de tout ou partie des objets, déterminer un début et une fin de l'emploi de l'objet au sein du traitement de données, l'allocation de l'objet à la zone mémoire correspondante étant réalisée en fonction du début et de la fin de l'emploi de l'objet.

Selon un aspect de l'invention, pour au moins un objet, ledit objet est alloué à la zone mémoire correspondante en fonction de la valeur d'un paramètre de définition dudit objet représentatif d'une zone mémoire parmi la pluralité de zones mémoires, ladite valeur étant renseignée dans ledit code préalablement à l'analyse du code informatique.

Selon un aspect de l'invention, le procédé comprend en outre une compilation du code informatique pour la production d'un ou plusieurs fichiers exécutables exécutés lors du traitement de données, la compilation comprenant pour au moins un objet, l'insertion dans un code informatique transformé généré à partir dudit code informatique pour la production du ou des fichiers exécutables, d'un appel à un destructeur configuré pour détruire ledit objet de la zone mémoire correspondante immédiatement à la fin de l'emploi dudit objet.

Selon un aspect de l'invention, pour au moins un objet, l'objet est alloué à une zone mémoire à un instant où la taille de l'objet dans la zone mémoire n'est pas connue.

L'invention concerne en outre un programme informatique comprenant des instructions pour la mise en oeuvre du procédé tel que défini ci-dessus lorsqu'exécutées par un processeur.

L'invention concerne en outre un dispositif tel que défini en revendication 9.

L'invention sera mieux comprise à la lecture de la description détaillée qui va suivre, donnée uniquement à titre d'exemple et faite en référence aux Figures annexées sur lesquelles :
- la Figure 1 illustre un dispositif selon l'invention ;
- la Figure 2 illustre un module mémoire du dispositif de la Figure 1 ;
- la Figure 3 est un diagramme-bloc illustrant un procédé selon l'invention ;
- la Figure 4 illustre les débuts et fins d'emploi d'une pluralité d'objets dans le cadre de l'invention ; et
- la Figure 5 illustre une configuration alternative au sens de l'invention.

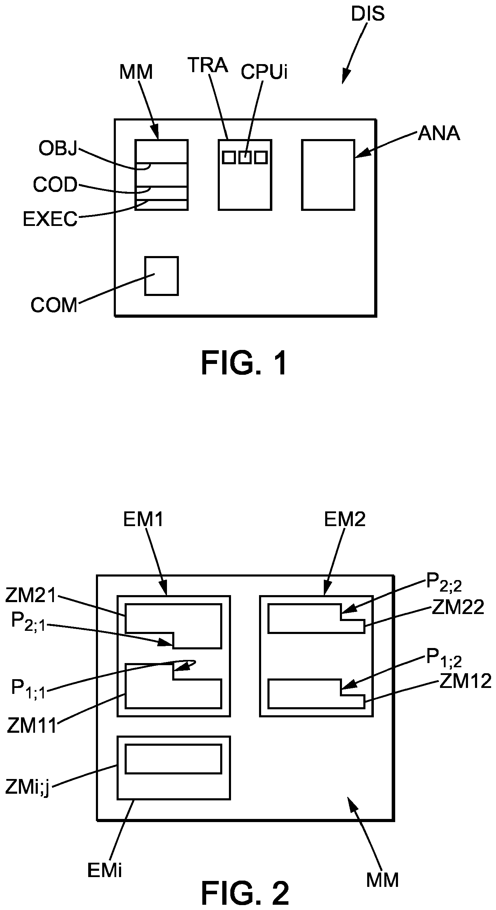

La Figure 1 illustre un dispositif DIS selon l'invention.

Le dispositif DIS est configuré pour être employé au moins en vue de la réalisation d'un traitement de données.

Dans le cadre de l'invention, deux configurations du dispositif DIS sont prévues.

Dans le cadre de la première configuration, le dispositif DIS est adapté pour la mise en oeuvre effective du traitement de données.

Dans le cadre de la deuxième configuration, le dispositif DIS intervient dans la préparation du traitement de données, dont la mise en oeuvre effective est menée par un deuxième dispositif distinct du dispositif DIS.

Ceci est décrit en détails dans ce qui suit.

De façon générale, le dispositif DIS est un dispositif informatique, les données dont il est question dans le traitement de données étant des données numériques.

Les données du traitement de données se rapportent à un contenu quelconque. Par exemple, elles sont représentatives d'informations envoyées par un premier équipement électronique à destination d'un deuxième équipement électronique.

Le traitement de données comprend la manipulation d'objets OBJ faisant partie des données du traitement de données. On remarque que ces objets peuvent intervenir à un stade quelconque du traitement de données, et exister sur une portion plus ou moins longue du traitement de données, voire toute la durée de traitement de données.

Par exemple, les objets OBJ présentent un type quelconque parmi les types d'objets communément rencontrés dans les traitements de données.

Par exemple, chaque objet OBJ correspond à un élément parmi le groupe comprenant au moins un nombre, une matrice, une liste, une chaîne de caractères.

Dans le cadre de la première configuration du dispositif, le dispositif DIS comprend un module de communication COM, un module mémoire MM et un module de traitement TRA. Il comprend en outre un module d'analyse ANA.

Ces éléments sont en communication les uns avec les autres, par exemple au moyen d'un ou plusieurs bus auxquels ils sont connectés.

Le module de communication COM est configuré pour permettre les communications entre le dispositif DIS et d'autres équipements. Par exemple, ce module est configuré pour la réception par le dispositif DIS de données utilisées au départ du traitement de données.

Avantageusement, ce module COM est également prévu pour la fourniture à un dispositif distant du dispositif DIS des données résultant de ce traitement de données.

Le module de communication COM est adapté pour des communications selon une ou plusieurs technologie connue.

Avantageusement, le module de communication COM est adapté pour les communications sans fil. Par exemple, il est adapté pour des communications sans fil reposant sur une ou plusieurs technologies standardisées employées en téléphonie mobile telles que 3G, 4G, 5G, etc., une ou plusieurs technologies de communication en champ proche, et/ou une ou plusieurs des technologies parmi les technologies ZigBee, RFID, WiFi, etc.

Alternativement ou parallèlement, le module de communication COM est adapté pour les communications filaires, par opposition aux télécommunications sans fil. Par exemple, il comprend une ou plusieurs prises pour la connexion du module de communication à un équipement distant via un fil.

Toute communication via un support de données amovible tel qu'un module USB, pour Universal Serial Bus (qui peut être traduit par Bus Universel en Série), est évidemment possible.

Le module mémoire MM est adapté pour le stockage de données de façon générale.

Dans le contexte de l'invention, le module mémoire MM est en particulier adapté pour le stockage des données du traitement de données, notamment des objets OBJ, et ce aux différents stades du traitement des données.

Le module mémoire MM est également adapté pour le stockage de programmes nécessaires au bon fonctionnement du dispositif DIS, et ce aussi bien pour la réalisation du traitement de données que pour le fonctionnement courant du dispositif DIS.

Notamment, le module mémoire MM est adapté pour le stockage d'un programme PRG selon l'invention comprenant des instructions pour la mise en oeuvre du procédé selon l'invention décrit ci-après lorsqu'exécutées par un processeur tel que le module de traitement TRA.

Le module mémoire MM est également adapté pour le stockage d'un code informatique COD qui définit le traitement de données.

Le code informatique COD est représentatif d'une définition d'une ou plusieurs séquences d'opérations du traitement de données, dans le cadre de laquelle les objets OBJ du traitement sont manipulés.

Par exemple, pour chaque objet OBJ du traitement, le code informatique COD comprend une définition de l'objet OBJ considéré ainsi que de l'emploi de cet objet. Cet emploi présente un début et une fin.

On remarque que cette définition et/ou cet emploi n'est pas nécessairement explicite dans le code informatique COD. Autrement dit, la définition et l'emploi peuvent naître du code informatique sans s'y trouver sous forme explicite.

On remarque que cette définition est en revanche typiquement rendue explicite dans un ou plusieurs fichiers exécutables EXEC décrits ci-après et générés à partir du code informatique.

Par exemple, le début de l'emploi est défini par la première occurrence, dans le code COD, de l'objet OBJ. La fin de l'emploi est par exemple définie par la dernière occurrence, dans le code COD, de l'objet en question.

L'emploi en question inclut au moins une opération au cours de laquelle l'objet est manipulé, telle que par exemple une opération de création de l'objet. Avantageusement, l'emploi comprend la génération d'un nouvel objet à partir de l'objet en question.

Le code COD est rédigé dans un ou plusieurs langages informatiques. Par exemple, ce langage est un langage connu, tel que le langage C++.

En pratique, le code informatique COD définit en tout ou partie les opérations du traitement de données effectué. Par exemple, il définit ainsi les données d'entrée du traitement ainsi que l'ensemble des opérations auxquelles ces données sont soumises lors du traitement.

De manière classique, le code informatique COD est destiné à être transformé en un ou plusieurs fichiers exécutables EXEC et dont l'exécution par un ou plusieurs processeurs tels ceux du modules de traitement TRA se traduit par la mise en oeuvre du traitement de données. Cette opération de transformation est connue sous le nom de compilation.

Cette transformation se traduit par l'existence du code sous une ou plusieurs formes formant des états intermédiaires du code entre sa forme initiale en tant que code informatique COD, et les fichiers exécutables EXEC en question. Comme décrit ci-après, l'une de ces formes inclut par exemple, outre le code dans une version transformée ou non, des instructions ajoutées par rapport au code COD, telles que par exemple des instructions ajoutées par le module d'analyse ANA.

Le module mémoire MM comprend au moins une entité mémoire EMi, i indexant la ou les entités mémoires.

Chaque entité mémoire EMi forme un espace mémoire continu pour le stockage de données du traitement, en particulier des objets OBJ. Autrement dit, au sein de chaque entité mémoire, les adresses logiques des différents blocs formant l'espace mémoire se suivent.

L'espace mémoire en question est un espace mémoire logique. On remarque qu'un espace mémoire peut correspondre à plusieurs espaces mémoires physiques.

De manière connue, cet espace mémoire comprend des blocs adaptés pour contenir des données, restituer ces données, et détruire ces données, et, ce faisant, rendre à nouveau disponibles les blocs précédemment occupés pour de nouvelles données.

Le principe physique sous-tendant ces fonctionnalités est par exemple connu.

De façon générale, les entités mémoires sont par exemple de facture connue et sont de type quelconque. Avantageusement toutefois, les entités mémoires sont des entités de type mémoire vive, telle que par exemple de type DRAM (pour Dynamic Random Access Memory, pour Mémoire Vive Dynamique).

Bien qu'illustré en Figures 1 et 2 sous la forme d'un bloc localisé spatialement, le module mémoire MM prend une forme quelconque en termes de nombre d'entités mémoires qu'il comprend et de distribution de ces entités mémoires entre les différents éléments du dispositif DIS illustrés.

Par exemple, tout ou partie de ces entités mémoire est contenu dans le module de traitement TRA.

Le module de traitement TRA est configuré pour piloter les autres éléments du dispositif DIS pour le fonctionnement du dispositif DIS.

Le module de traitement TRA comprend un ou plusieurs processeurs CPUi notamment adaptés pour exécuter des instructions, notamment pour effectuer des opérations sur les données de traitement de données pour la mise en oeuvre de ce traitement.

Avantageusement, le module TRA comprend une pluralité de tels processeurs. Les processeurs CPUi sont par exemple adaptés pour fonctionner selon un mode de fonctionnement dans le cadre duquel l'un des processeurs fonctionne comme processeur maître, et les autres comme processeurs esclaves, comme connu de l'homme du métier.

En référence à la Figure 2, le module d'analyse ANA est configuré pour analyser le code informatique COD contenu dans le module mémoire MM pour le transformer en le ou les fichiers exécutables EXEC.

De manière plus spécifique, le module ANA est configuré pour au moins analyser le code informatique COD et générer, à partir de ce code, le ou les fichiers exécutables destinés à être exécutés pour la mise en oeuvre du traitement de données en tant que tel. Autrement dit, le module d'analyse ANA est configuré en tant que compilateur. Par exemple, il s'agit d'un compilateur de type connu. Avantageusement, le compilateur est paramétrable par un utilisateur.

Dans le contexte de l'invention, le module d'analyse ANA est configuré pour allouer, en fonction de l'analyse du code informatique COD, au moins une partie des objets OBJ du traitement de données à l'une d'une pluralité de zones mémoires ZMi,j appartenant respectivement à l'entité mémoire EMj. Autrement dit, le module d'analyse ANA est configuré pour définir que, lors de l'exécution des fichiers issus de la compilation, la construction - et donc la destruction - de chaque objet OBJ par le module ANA aura lieu dans telle ou telle zone mémoire ZMi,j qui se trouve dans l'entité mémoire EMj.

En outre, dans le contexte de l'invention, le module d'analyse ANA est configuré pour allouer les objets OBJ en question aux zones mémoires ZMi,j de sorte que chaque zone mémoire ZMi,j présente, lors du traitement de données, un fonctionnement en pile.

Autrement dit, lors du traitement de données en tant que tel, du fait de l'allocation réalisée par le module ANA, chaque ZMi,j présente un fonctionnement de type LIFO, pour dernier arrivé premier parti.

Avantageusement, ceci est le cas pour tous les objets OBJ du traitement de données.

On remarque que dans certaines réalisations, pour au moins un objet OBJ, son allocation à l'une des zones mémoires est réalisée à un instant où la taille de l'objet OBJ dans cette zone mémoire n'est pas connue.

Le détail de l'allocation des objets OBJ par le module d'analyse ANA est décrit dans le cadre de la description du procédé selon l'invention ci-après.

Les zones mémoires ZMi,j sont au moins au nombre de deux. Leur nombre exact est par exemple prédéterminé.

Le fonctionnement en pile est connu en soi. Dans le cadre de ce fonctionnement, chaque zone mémoire ZMi,j est associée à un pointeur Pi,j qui est représentatif du premier bloc mémoire libre de la zone correspondante, les blocs précédents, c'est-à-dire situés entre le bloc mémoire de départ de la zone mémoire et ce bloc désigné par le pointeur, étant occupés par des données.

En cas de construction d'un objet dans la zone mémoire ZMi,j, celui-ci est construit dans le bloc-mémoire désigné par le pointeur et les blocs mémoires suivants en fonction de la taille de l'objet, le pointeur étant mis à jour pour désigner le nouveau premier bloc mémoire libre.

En cas de destruction du dernier objet crée dans la zone mémoire, les blocs mémoires correspondants sont libérés et le pointeur est mis à jour pour désigner le premier bloc mémoire libre de la zone mémoire après cette destruction.

Ainsi, la gestion d'une mémoire en pile est particulièrement simple dans la mesure où elle repose essentiellement sur la gestion du pointeur associé.

Comme rendu apparent ci-dessus, ici, le terme d'allocation est à comprendre comme désignant l'association faite entre un objet OBJ et une zone mémoire ZMi,j et qui aboutit au fait que lors du traitement de données, l'objet OBJ est construit dans cette zone mémoire. Dans le cadre de l'invention, cette allocation est faite par le module d'analyse ANA en amont du traitement de données effectif.

Avantageusement, dans le cadre de l'invention, au moins deux zones mémoires ZMi,j font partie d'une même entité mémoire EMi. Autrement dit, elles correspondent à des régions différentes d'un même espace mémoire.

Avantageusement, en outre, ces zones mémoires ZMi,j ont des emplacements de départ respectifs correspondant à des extrémités de cette entité mémoire EMi, qui sont opposées. Autrement dit, en considérant que l'entité mémoire EMi présente un premier bloc mémoire et un dernier bloc mémoire au sens d'un ordre de parcours choisi, ces premier et dernier blocs forment des points de départ respectifs des deux zones mémoires en question.

Lors de la construction d'un objet dans l'une de ces zones mémoires, la mise à jour du pointeur associé se traduit par le déplacement de ce pointeur vers le pointeur de l'autre zone mémoire.

Autrement dit, en cas de remplissage, les pointeurs de ces zones mémoires se déplacent dans des sens respectifs opposés, de sorte qu'ils se rapprochent l'un de l'autre en cas de création d'un objet dans l'une des zones mémoires.

Par exemple, les zones mémoires de référence ZM11 et ZM21 en Figure 2 sont configurées de la sorte.

Cette configuration est particulièrement avantageuse en termes de dimensionnement des espaces mémoires impliqués.

Toutefois, cette configuration est optionnelle. Par exemple, les zones mémoires ZMi,j d'une même entité EMj ont des pointeurs Pi,j, qui se déplacent dans le même sens en cas de construction d'un objet dans la zone mémoire associée.

Dans cette configuration, le point de départ de l'une des mémoires ne forment pas un bloc mémoire d'extrémité, comme illustré par la zone mémoire ZM22 en Figure 2.

On remarque que le module d'analyse ANA est avantageusement logiciel.

Alternativement ou parallèlement, le module d'analyse ANA est matériel.

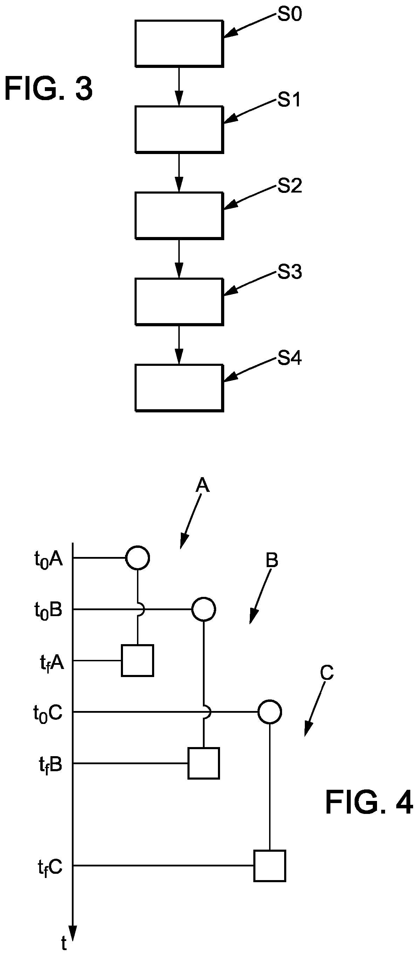

Le procédé selon l'invention pour la réalisation d'un traitement de données va maintenant être décrit en détails en référence aux Figures, notamment à la Figure 3.

Lors d'une étape initiale S0, on dispose du code informatique COD, qui définit le traitement de données à venir. Comme indiqué précédemment, cette définition peut être en partie implicite, notamment pour les objets OBJ.

Ce code informatique COD est par exemple issu d'un processus de génération impliquant une ou plusieurs personnes ayant rédigé le code informatique en tout ou partie, et/ou un ou plusieurs équipements électroniques, typiquement utilisé pour la saisie du code en question et/ou la génération d'une partie du code.

Lors d'une étape S1, le module d'analyse ANA analyse le code informatique COD pour allouer au moins une partie des objets OBJ du traitement de données reflétés dans le code informatique COD à l'une des zones mémoires ZMi,j de sorte que celles-ci fonctionnent en pile lors de l'exécution du traitement de données.

Avantageusement, chaque objet OBJ du traitement de données est ainsi alloué à l'une des zones mémoires ZMi,j.

Dans une réalisation donnée, pour faire cette allocation, pour chaque objet OBJ, le module d'analyse ANA détermine le début et la fin d'emploi de l'objet OBJ considéré dans le cadre du traitement de données.

Par exemple, pour deux objets A et B, leur emploi dans le traitement de données est défini par le code illustratif donné ci-dessous:

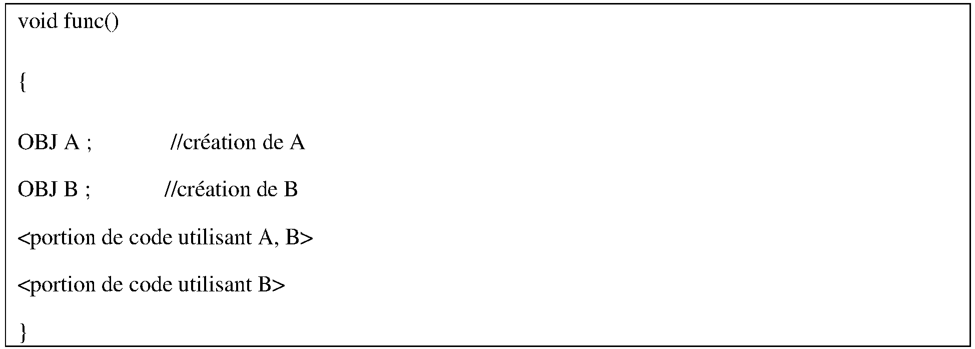

Les débuts et fins d'emploi des objets, par exemple notés par leurs instants respectifs d'occurrence t₀A, t_{f}A, t₀B, t_{f}B, t₀C et t_{f}C pour trois objets A, B, C illustrés sur la Figure 4, sont employés pour l'association à chaque objet d'une zone mémoire ZMi,j.

Par exemple, dans une configuration, cette association est réalisée par tri des objets en groupes d'objets au sein desquels les emplois des objets ne se chevauchent pas, comme illustré en Figure 4.

Autrement dit, au sein de chaque groupe d'objets, pour toute paire d'objets A, B, A étant celui dont l'emploi prend fin le premier, la relation t_{f}A < t₀B est vérifiée, où t_{f}A désigne la fin d'emploi de l'objet A et t₀B le début de l'emploi de l'objet B.

Par exemple, sur la Figure 4, les objets A et C peuvent être regroupés dans un groupe donné et alloués à une même zone mémoire, mais l'objet B ne peut être regroupé avec les objets A et C et donc ne peut être alloué à la zone mémoire de l'objet A ou de l'objet C.

On remarque que cette opération ne requiert pas l'expression des débuts et fins d'emploi sous la forme de dates explicites, mais simplement la détermination de leur ordre relatif d'occurrence, qui est un résultat de l' analyse du code COD par le module d'analyse ANA.

Chaque groupe d'objets formé, et donc chaque objet du groupe, est alors associé à zone mémoire ZMi,j donnée.

On remarque que le processus de tri est avantageusement paramétrable, par exemple dans la définition des modalités du tri.

Ainsi, par exemple, lorsque plusieurs objets sont adaptés pour être placés dans un même groupe sans toutefois pouvoir s'y trouver simultanément, on adapte les modalités de choix de l'objet retenu selon un ou plusieurs critères prédéfinis.

Par exemple, dans une configuration donnée, on choisit l'objet dont la création est la plus précoce dans le temps.

Dans une réalisation alternative, l'allocation est menée à partir d'informations comprises dans le code informatique et renseignées dans celui-ci avant l'analyse par le module d'analyse ANA.

Avantageusement, pour un objet OBJ donné, cette information comprend la valeur d'un paramètre de définition dudit objet représentatif d'une zone mémoire ZMi,j parmi la pluralité de zones mémoires possibles, cette valeur ayant renseignée dans ledit code préalablement à l'analyse du code informatique COD par le module d'analyse ANA.

Autrement dit, dans cette configuration, au moment de son analyse, le code COD contient déjà la déclaration de l'allocation de tout ou partie des objets OBJ à l'une des zones mémoires ZMi,j.

On remarque que les deux approches sont compatibles. Ainsi, par exemple, pour une partie des objets, l'allocation est prérenseignée dans le code, et pour l'autre partie des objets, l'allocation est déterminée par analyse des début et fin d'emploi des objets comme décrit ci-dessus.

Une fois l'allocation déterminée, le module d'analyse ANA rend compte du résultat de l'allocation dans le code COD ou bien dans un code transformé résultant d'une étape de transformation du code en le ou les fichiers exécutables EXEC. Pour ce compte-rendu, le module d'analyse insère des informations correspondantes dans le code ou le code transformé, qui sont représentatives de la zone mémoire ZMi,j à laquelle l'objet OBJ est alloué.

Par exemple, l'information ajoutée prend la forme de la valeur d'un ou plusieurs paramètres ou attributs de la définition de l'objet dans le code ou le code transformé qui caractérise(nt) la zone mémoire ZMi,j associée, cette ou ces valeurs étant alors conservée(s) lors des différentes étapes de transformation du code de sorte qu'elle ou elles sont présentes dans le ou les fichiers exécutables.

Avantageusement, lors d'une étape S2, pour au moins un objet OBJ, le module d'analyse ANA réalise l'insertion dans le code informatique COD ou le code transformé d'un appel à un destructeur configuré pour causer la destruction dudit objet de la zone mémoire ZMi,j correspondante immédiatement à la fin de l'emploi dudit objet.

Avantageusement, l'emplacement de cette insertion est indépendant de la portée d'une ou plusieurs fonctions dans le cadre de laquelle ou desquelles ledit objet est manipulé. Cette portée correspond à l'emploi de la fonction.

Autrement dit, lors de cette étape, le module d'analyse ANA configure l'occurrence de la destruction de l'objet considéré de la zone mémoire ZMi,j associée pour faire intervenir cette destruction dès la fin de l'emploi de l'objet, et non à la fin de la portée de la fonction dans le cadre de laquelle l'emploi de l'objet intervient, comme cela est usuellement le cas.

Par exemple, en se rapportant au code illustratif ci-dessus, l'insertion de ces destructeurs pour les objets A et B est opérée comme suit.

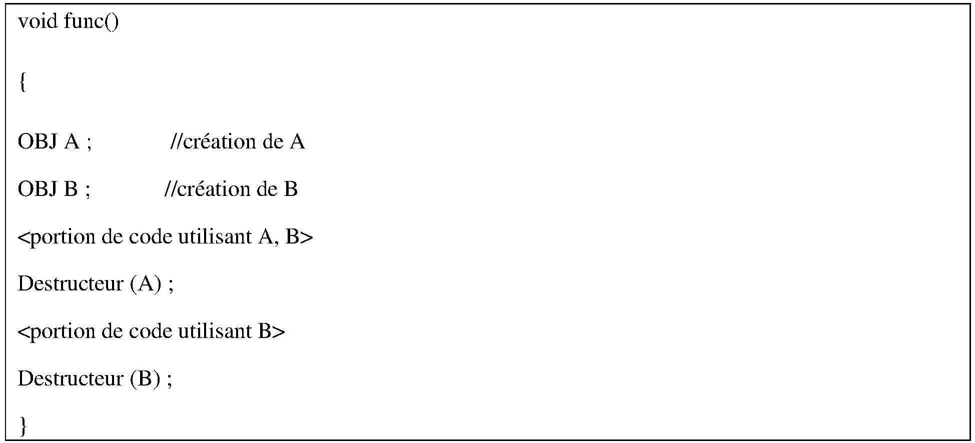

On remarque que cette étape est optionnelle.

Alternativement, le module d'analyse ANA fait intervenir les destructeurs à la fin de la portée de la fonction manipulant l'objet et qui inclut la fin de l'emploi de l'objet.

Lors d'une étape S3, le module d'analyse ANA achève la compilation du code COD, ce qui se traduit par la génération du ou des fichiers exécutables EXEC par le module de traitement TRA pour la réalisation du traitement de données en tant que telle.

Cette étape peut inclure une ou plusieurs opérations connues de l'homme du métier.

Lors d'une étape S4, qui peut être vue comme étant la suite du procédé ci-dessus, le traitement de données est mis en oeuvre via l'exécution du ou des fichiers EXEC résultant de l'étape précédente par le module de traitement TRA.

Lors de ce traitement, les objets OBJ sont successivement créés et détruits dans les zones mémoires auxquelles ils ont été alloués lors des étapes précédentes, et ce de sorte que ces zones mémoires ZMi,j fonctionnent en pile, et ce jusqu'à achèvement du traitement de données en tant que tel.

La description ci-dessus a été donnée pour la première configuration, c'est-à-dire la configuration dans laquelle le dispositif DIS effectue aussi bien la partie compilation du code informatique COD que la partie exécution des fichiers EXEC pour la mise en oeuvre du traitement de données en tant que tel.

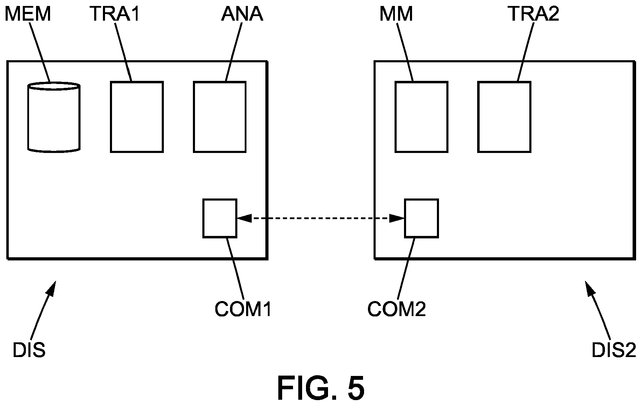

Dans la deuxième configuration, en référence à la Figure 5, le traitement des données, qui résulte de l'exécution des fichiers EXEC fournis à l'issue de la compilation, est effectué par un deuxième dispositif DIS2 comprenant le module mémoire MM tel que décrit ci-dessus, le dispositif DIS étant configuré pour réaliser l'allocation des objets OBJ aux zones mémoires ZMi,j du module mémoire MM du deuxième dispositif DIS2.

Dans cette configuration, le dispositif DIS est adapté pour communiquer avec d'autres équipements, notamment le deuxième dispositif DIS2.

A cet effet, il comprend un module de communication COM1. Ce module de communication COM1 est par exemple tel que le module COM décrit ci-dessus.

En outre, le dispositif DIS comprend le module d'analyse ANA décrit ci-dessus, qui est prévu pour analyser le code informatique COD et, en fonction de cette analyse, allouer les objets OBJ à l'une des zones mémoires ZMi,j qui, dans cette configuration, font partie du module mémoire MM situé dans le deuxième dispositif, et ce, toujours de sorte que ces zones mémoires ZMi,j observent un fonctionnement en pile lors du traitement de données en tant que tel.

En outre, le dispositif DIS comprend une mémoire MEM configurée pour le stockage du code informatique COD, le stockage des fichiers EXEC issus de la compilation du code COD par le module d'analyse ANA et les différents fichiers intermédiaires entre le code COD et ces fichiers EXEC. La mémoire MEM est également prévue pour le stockage du programme PRG.

Dans cette deuxième configuration, la mémoire MEM n'a pas vocation à contenir les objets OBJ, qui sont manipulés par le deuxième dispositif DIS2 qui met en oeuvre le traitement de données en tant que tel.

Cette mémoire MEM présente une configuration quelconque. En particulier, elle peut se présenter sous la forme d'une unique entité mémoire physique et/ou logique. Dans certaines réalisations, la mémoire MEM peut présenter une configuration analogue à celle du module mémoire MM (typiquement identique en termes de structure).

Le dispositif DIS comprend également un module de traitement, noté TRA1, adapté pour exécuter des instructions. Ce module TRA1 comprend un ou plusieurs processeurs. En pratique, ce module de traitement TRA1 est prévu pour exécuter des programmes se trouvant dans la mémoire MEM pour le bon fonctionnement du dispositif DIS.

Quant à lui, le deuxième dispositif DIS2 est adapté pour communiquer avec d'autres équipements, notamment avec le dispositif DIS pour la réception des fichiers EXEC qu'il a vocation à exécuter pour mettre en oeuvre le traitement de données en tant que tel.

Il est par exemple prévu pour également fournir des données résultant du traitement de données à un équipement distant.

A cet effet, il comprend un module de communication COM2 qui correspond par exemple au module de communication COM décrit ci-dessus.

Comme indiqué ci-dessus, il comprend également le module mémoire MM décrit ci-dessus comprenant les zones mémoires ZMi,j auxquelles les objets OBJ du traitement de données sont alloués par le module d'analyse ANA en fonction de l'analyse du code informatique.

En outre, il comprend un module de traitement TRA2. Ce module correspond avantageusement au module de traitement TRA décrit ci-dessus.

Dans le cadre de la deuxième configuration, le déroulement du procédé est analogue à celui décrit ci-dessus, à la différence que la génération des fichiers EXEC sur la base du code COD est mise en oeuvre via le dispositif DIS, et que l'exécution de ces fichiers EXEC pour la mise en oeuvre du traitement de données en tant que tel est mise en oeuvre via le deuxième dispositif DIS2 auquel les fichiers EXEC ont été fournis.

Autrement dit, le module d'analyse ANA du dispositif DIS analyse le code COD qui se trouve dans la mémoire MEM du dispositif DIS, alloue les objets OBJ dont le code rend compte aux différentes zones mémoires ZMi,j du module mémoire MM du deuxième dispositif DIS2 de sorte qu'elles fonctionnent en pile lors du traitement de données, et génère le (ou les) fichier EXEC.

Ces fichiers sont ensuite transférés au deuxième dispositif qui met en oeuvre le traitement de données à partir de ces fichiers.

Lors de ce traitement, les objets OBJ sont générés dans la zone mémoire ZMi,j allouée par le module d'analyse de sorte que les zones mémoires ZMi,j fonctionnent en pile.

Ainsi, du fait de ces deux configurations possibles, le module mémoire MM est soit un élément du dispositif DIS, soit un élément d'un autre dispositif que le dispositif DIS. Dans la première configuration, le module MM fait partie du dispositif DIS. Dans la deuxième configuration, il fait partie d'un dispositif DIS2 distinct du dispositif DIS.

L'invention présente plusieurs avantages.

Tout d'abord, elle permet de disposer d'une mémoire qui, de façon globale, fonctionne de manière grandement simplifiée, du fait qu'elle ne comprend que des zones mémoires fonctionnant en pile.

En outre, l'invention est particulièrement aisément adaptable à des environnements et des configurations variés. Notamment, l'invention est adaptée à des modules de traitement TRA très variés, à des données de complexité très variable, et à des configurations de module mémoire très différentes.

Enfin, elle est aisément applicable à des dispositifs préexistants du fait qu'elle ne requiert pas de remplacer des composants d'un dispositif informatique, ou bien d'en réaliser de profondes modifications.

## Revendications

1. Procédé pour la réalisation d'un traitement de données, le procédé étant mis en oeuvre par des moyens informatiques et comprenant :
- pour une pluralité d'objets (OBJ) du traitement de données, mener une analyse d'un code informatique (COD) du traitement de données définissant un emploi desdits objets (OBJ) au sein du traitement de données,
- en fonction de l'analyse du code informatique (COD), allouer chaque objet à l'une d'une pluralité de zones mémoires (ZMi,j) pour la construction puis la destruction de chaque objet dans la zone mémoire correspondante lors du traitement de données de sorte que lors du traitement de données, chaque zone mémoire (ZMi,j) présente un fonctionnement en pile,
dans lequel au moins deux zones mémoires (ZMi,j) forment des zones respectives distinctes d'une seule et même entité mémoire (EM1 ; EM2),
**caractérisé en ce que** les deux zones mémoires (ZMi,j) sont chacune associée à un pointeur (Pi,j) configuré pour pointer vers un premier espace libre de la zone mémoire considérée, le pointeur (Pi,j) de chacune des deux zones mémoires étant configuré pour se rapprocher du pointeur (Pi,j) de l'autre zone mémoire en cas de construction d'un objet dans la zone mémoire considéré.

2. Procédé selon la revendication 1, dans lequel les deux zones mémoires (ZMi,j) ont des emplacements de départ respectifs définis par des extrémités respectives opposées de l'entité mémoire (EM).

3. Procédé selon l'une quelconque des revendications précédentes, dans lequel au moins deux zones mémoires (ZMi,j) appartiennent à des entités mémoires différentes (EMi).

4. Procédé selon l'une quelconque des revendications précédentes, dans lequel mener une analyse du code informatique inclut, pour chaque objet (OBJ) de tout ou partie des objets, déterminer un début et une fin de l'emploi de l'objet (OBJ) au sein du traitement de données, l'allocation de l'objet à la zone mémoire correspondante étant réalisée en fonction du début et de la fin de l'emploi de l'objet.

5. Procédé selon l'une quelconque des revendications précédentes, dans lequel, pour au moins un objet, ledit objet est alloué à la zone mémoire correspondante en fonction de la valeur d'un paramètre de définition dudit objet représentatif d'une zone mémoire (ZMi,j) parmi la pluralité de zones mémoires, ladite valeur étant renseignée dans ledit code préalablement à l'analyse du code informatique.

6. Procédé selon l'une quelconque des revendications précédentes, comprenant en outre une compilation du code informatique (COD) pour la production d'un ou plusieurs fichiers exécutables exécutés lors du traitement de données, la compilation comprenant pour au moins un objet, l'insertion dans un code informatique transformé généré à partir dudit code informatique pour la production du ou des fichiers exécutables, d'un appel à un destructeur configuré pour détruire ledit objet (OBJ) de la zone mémoire (ZMi,j) correspondante immédiatement à la fin de l'emploi dudit objet (OBJ).

7. Procédé selon l'une quelconque des revendications précédentes, dans lequel, pour au moins un objet (OBJ), l'objet est alloué à une zone mémoire à un instant où la taille de l'objet dans la zone mémoire (ZMi,j) n'est pas connue.

8. Programme informatique comprenant des instructions qui, lorsque le programme est exécuté par un ordinateur, conduisent celui-ci à mettre en oeuvre le procédé selon l'une quelconque des revendications précédentes.

9. Dispositif (DIS) configuré pour être employé en vue de la réalisation d'un traitement de données, le dispositif comprenant un module d'analyse (ANA) configuré pour :
- pour une pluralité d'objets (OBJ) du traitement de données, mener une analyse d'un code informatique (COD) du traitement de données définissant un emploi desdits objets au sein du traitement de données,
- en fonction de l'analyse du code informatique, allouer chaque objet (OBJ) à l'une d'une pluralité de zones mémoires (ZMi,j) d'un module mémoire (MM) pour la construction puis la destruction de chaque objet dans la zone mémoire correspondante lors du traitement de données de sorte que lors du traitement de données, chaque zone mémoire (ZMi,j) présente un fonctionnement en pile,
dans lequel au moins deux zones mémoires (ZMi,j) forment des zones respectives distinctes d'une seule et même entité mémoire (EM1 ; EM2),
**caractérisé en ce que** les deux zones mémoires (ZMi,j) sont chacune associée à un pointeur (Pi,j) configuré pour pointer vers un premier espace libre de la zone mémoire considérée, le pointeur (Pi,j) de chacune des deux zones mémoires étant configuré pour se rapprocher du pointeur (Pi,j) de l'autre zone mémoire en cas de construction d'un objet dans la zone mémoire considéré.

## Patentansprüche

1. Verfahren zur Durchführung einer Datenverarbeitung, wobei das Verfahren durch Computermittel implementiert wird und umfasst:
- für eine Mehrzahl von Objekten (OBJ) der Datenverarbeitung, Durchführen einer Analyse eines Computercodes (COD) der Datenverarbeitung, der eine Verwendung der Objekte (OBJ) innerhalb der Datenverarbeitung definiert,
- in Abhängigkeit von der Analyse des Computercodes (COD), Zuweisen jedes Objekts zu einem aus einer Mehrzahl von Speicherbereichen (ZMi,j) für den Aufbau und die anschließende Zerstörung jedes Objekts im entsprechenden Speicherbereich während der Datenverarbeitung, so dass während der Datenverarbeitung jeder Speicherbereich (ZMi,j) einen Stapelbetrieb aufweist,
- wobei wenigstens zwei Speicherbereiche (ZMi,j) jeweils unterschiedliche Bereiche ein und derselben Speichereinheit (EM1; EM2) bilden,
**dadurch gekennzeichnet, dass** die beiden Speicherbereiche (ZMi,j) jeweils einem Zeiger (Pi,j) zugeordnet sind, der dazu ausgebildet ist, auf einen ersten freien Platz des betrachteten Speicherbereichs zu zeigen, wobei der Zeiger (Pi,j) jedes der beiden Speicherbereiche dazu ausgebildet ist, sich dem Zeiger (Pi,j) des anderen Speicherbereichs anzunähern, wenn ein Objekt in dem betrachteten Speicherbereich konstruiert wird.

2. Verfahren nach Anspruch 1, wobei die beiden Speicherbereiche (ZMi,j) jeweilige Startpositionen haben, die durch jeweils gegenüberliegende Enden der Speichereinheit (EM) definiert sind.

3. Verfahren nach einem der vorhergehenden Ansprüche, wobei wenigstens zwei Speicherbereiche (ZMi,j) zu unterschiedlichen Speichereinheiten (EMi) gehören.

4. Verfahren nach einem der vorhergehenden Ansprüche, wobei das Ausführen einer Analyse des Computercodes für jedes Objekt (OBJ) aller oder eines Teils der Objekte das Bestimmen eines Beginns und eines Endes der Verwendung des Objekts (OBJ) innerhalb der Datenverarbeitung umfasst, wobei die Zuweisung des Objekts zum entsprechenden Speicherbereich in Abhängigkeit vom Beginn und vom Ende der Verwendung des Objekts erfolgt.

5. Verfahren nach einem der vorhergehenden Ansprüche, wobei für wenigstens ein Objekt das Objekt dem entsprechenden Speicherbereich in Abhängigkeit von dem Wert eines Parameters zur Definition des Objekts zugewiesen wird, der für einen Speicherbereich (ZMi,j) aus der Mehrzahl von Speicherbereichen repräsentativ ist, wobei der Wert in dem Code vor der Analyse des Computercodes angegeben wird.

6. Verfahren nach einem der vorhergehenden Ansprüche, welches ferner eine Kompilierung des Computercodes (COD) zur Erzeugung einer oder mehrerer ausführbarer Dateien umfasst, die bei der Datenverarbeitung ausgeführt werden, wobei die Kompilierung für wenigstens ein Objekt das Einfügen eines Aufrufs eines Destruktors in einen transformierten Computercode, der aus dem Computercode zur Erzeugung der ausführbaren Datei(en) erzeugt wird, umfasst, der dazu ausgebildet ist, das Objekt (OBJ) des entsprechenden Speicherbereichs (ZMi,j) unmittelbar nach dem Ende der Verwendung des Objekts (OBJ) zu zerstören.

7. Verfahren nach einem der vorhergehenden Ansprüche, wobei für wenigstens ein Objekt (OBJ) das Objekt einem Speicherbereich zu einem Zeitpunkt zugewiesen wird, zu dem die Größe des Objekts in dem Speicherbereich (ZMi,j) nicht bekannt ist.

8. Computerprogramm mit Anweisungen, die, wenn das Programm von einem Computer ausgeführt wird, diesen dazu veranlassen, das Verfahren nach einem der vorhergehenden Ansprüche auszuführen.

9. Vorrichtung (DIS), die dazu ausgebildet ist, zur Durchführung einer Datenverarbeitung verwendet zu werden, wobei die Vorrichtung ein Analysemodul (ANA) umfasst, das dazu ausgebildet ist:
- für eine Mehrzahl von Objekten (OBJ) der Datenverarbeitung eine Analyse eines Computercodes (COD) der Datenverarbeitung durchzuführen, der eine Verwendung der Objekte innerhalb der Datenverarbeitung definiert,
- in Abhängigkeit von der Analyse des Computercodes, jedes Objekt (OBJ) zu einem einer Mehrzahl von Speicherbereichen (ZMi,j) eines Speichermoduls (MM) zuzuweisen, für den Aufbau und die anschließende Zerstörung jedes Objekts in dem entsprechenden Speicherbereich während der Datenverarbeitung, so dass während der Datenverarbeitung jeder Speicherbereich (ZMi,j) einen Stapelbetrieb aufweist,
wobei wenigstens zwei Speicherbereiche (ZMi,j) jeweils unterschiedliche Bereiche einer einzigen und gleichen Speichereinheit (EM1; EM2) bilden, **dadurch gekennzeichnet, dass** die beiden Speicherbereiche (ZMi,j) jeweils einem Zeiger (Pi,j) zugeordnet sind, der dazu ausgebildet ist, auf einen ersten freien Platz des betreffenden Speicherbereichs zu zeigen, wobei der Zeiger (Pi,j) jedes der beiden Speicherbereiche dazu ausgebildet ist, sich dem Zeiger (Pi,j) des anderen Speicherbereichs anzunähern , wenn ein Objekt in dem betreffenden Speicherbereich konstruiert wird.

## Claims

1. A method for executing data processing, the method being implemented by computer means and comprising:
- for a plurality of objects (OBJ) of the data processing, conducting an analysis of a computer code (COD) of the data processing defining a use of said objects (OBJ) in the data processing,
- on the basis of the analysis of the computer code (COD), allocating each object to one of a plurality of memory areas (ZMi,j) for the construction and then the destruction of each object in the corresponding memory area during the data processing, in such a way that each memory area (ZMi,j) exhibits stack operation during the data processing,
wherein at least two memory areas (ZMi,j) form respective separate areas of the same memory entity (EM1, EM2),
**characterized in that** each of the two memory areas (ZMi,j) is associated with a pointer (Pi,j) configured to point toward a first free space of the memory area concerned, the pointer (Pi,j) of each of the two memory areas being configured to move closer to the pointer (Pi,j) of the other memory area if an object is constructed in the memory area concerned.

2. The method as claimed in claim 1, wherein the two memory areas (ZMi,j) have respective starting locations defined by respective opposite ends of the memory entity (EM).

3. The method as claimed in any one of the preceding claims, wherein at least two memory areas (ZMi,j) belong to different memory entities (EMi).

4. The method as claimed in any one of the preceding claims, wherein conducting an analysis of the computer code includes, for each object (OBJ) of some or all of the objects, determining a start and an end of the use of the object (OBJ) in the data processing, the allocation of the object to the corresponding memory area being carried out on the basis of the start and end of the use of the object.

5. The method as claimed in any one of the preceding claims, wherein, for at least one object, said object is allocated to the corresponding memory area on the basis of the value of a definition parameter of said object representative of one memory area (ZMi,j) from among the plurality of memory areas, said value being recorded in said code before the analysis of the computer code.

6. The method as claimed in any one of the preceding claims, further comprising compiling the computer code (COD) for the production of one or more executable files that are executed during the data processing, the compilation comprising, for at least one object, inserting, into a transformed computer code generated on the basis of said computer code for the production of the executable file or files, a call to a destructor configured to destroy said object (OBJ) of the corresponding memory area (ZMi,j) immediately at the end of the use of said object (OBJ).

7. The method as claimed in any one of the preceding claims, wherein, for at least one object (OBJ), the object is allocated to a memory area at an instant when the size of the object in the memory area (ZMi,j) is not known.

8. A computer program comprising instructions for implementing the method as claimed in any one of the preceding claims, when these instructions are executed by a processor.

9. A device (DIS) configured to be used for the execution of data processing, the device comprising an analysis module (ANA) configured for:
- for a plurality of objects (OBJ) of the data processing, conducting an analysis of a computer code (COD) of the data processing defining a use of said objects in the data processing,
- on the basis of the analysis of the computer code, allocating each object (OBJ) to one of a plurality of memory areas (ZMi,j) of a memory module (MM) for the construction and then the destruction of each object in the corresponding memory area during the data processing, in such a way that each memory area (ZMi,j) exhibits stack operation,
wherein at least two memory areas (ZMi,j) form respective separate areas of the same memory entity (EM1, EM2),
**characterized in that** each of the two memory areas (ZMi,j) is associated with a pointer (Pi,j) configured to point toward a first free space of the memory area concerned, the pointer (Pi,j) of each of the two memory areas being configured to move closer to the pointer (Pi,j) of the other memory area if an object is constructed in the memory area concerned.
